# EUROPÄISCHE PATENTSCHRIFT

(11) **EP 1 060 520 B1**
(45) Veröffentlichungstag und Bekanntmachung des Hinweises auf die Patenterteilung: **23.04.2008**
(21) Anmeldenummer: 99926218.1
(22) Anmeldetag: 01.07.1999
(51) Int. Cl.: H01L 31/042, E04D 13/18

(54) **AUS PROFILEN GEBILDETER RAHMEN FÜR PLATTENARTIGE ELEMENTE, ANORDNUNG VON MEHREREN SOLCHEN RAHMEN**
FRAME MADE OF SHAPED SECTIONS AND DESIGNED FOR PLATE-LIKE ELEMENTS, AND ARRAY OF SEVERAL SUCH FRAMES
BATI CONSTITUE DE PROFILES, DESTINE A DES ELEMENTS EN FORME DE PLAQUE, ET AGENCEMENT DE PLUSIEURS BATIS DE CE TYPE

(30) Priorität: 03.07.1998 CH 143098
(43) Veröffentlichungstag der Anmeldung: 20.12.2000
(73) Patentinhaber: Enecolo AG, 8617 Mönchaltorf (CH)
(72) Erfinder: TOGGWEILER, Peter, CH-8617 Mönchaltorf (CH)
(74) Vertreter: Schwabe, Hans-Georg
(86) Internationale Anmeldenummer: PCT/CH1999/000287
(87) Internationale Veröffentlichungsnummer: WO 2000/002256

(56) Entgegenhaltungen:
- EP-A- 0 619 404
- DE-A- 3 337 658
- FR-A- 2 465 315
- PATENT ABSTRACTS OF JAPAN vol. 018, no. 671 (M-1726), 19. Dezember 1994 (1994-12-19) & JP 06 264571 A (GANTAN BEAUTY KOGYO KK), 20. September 1994 (1994-09-20)
- PATENT ABSTRACTS OF JAPAN vol. 1997, no. 07, 31. Juli 1997 (1997-07-31) & JP 09 088280 A (KUBOTA CORP), 31. März 1997 (1997-03-31)
- PATENT ABSTRACTS OF JAPAN vol. 1996, no. 07, 31. Juli 1996 (1996-07-31) & JP 08 083921 A (KANEGAFUCHI CHEM IND CO LTD), 26. März 1996 (1996-03-26)

## Beschreibung

Die Erfindung bezieht sich auf einen Rahmen aus Profilen nach Anspruch 1, auf eine Anordnung von mehreren Rahmen sowie auf ein Schrägdach mit einer derartigen Anordnung.

Derartige Rahmen bekannter Bauart, dienen zum Einfassen von Platten, aus Metall, Keramik oder Glas. Sie können aber auch zum Einfassen von Solarmodulen oder Solarzellen verwendet werden. Die Platten können mit den Rahmen als Fassadenelemente bei Bauten verwendet werden. Solarzellen, die mit Rahmen gefasst sind, werden als freistehende, in unsern Breitengraden meist schräg gerichtete Elemente verwendet. Eine Vielzahl von Rahmen ist häufig nebeneinander und übereinander angeordnet. Es gibt auch Anlagen, bei denen die in Rahmen gefassten Solarzellen dem Lauf der Sonne folgend, nach dieser ausgerichtet werden.

Bei Häusern mit Schrägdächern sind Solarzellen über der eigentlichen Dachhaut aus z.B. Ziegeln angeordnet, da es unwirtschaftlich ist, mit Solarzellen allein oder solchen, die in Rahmen bisher bekannter Bauart gefasst sind ein Dach zu konstruieren, das wasserdicht ist. Durch die Überlappungen und den damit verringerten Lichteinfall auf die Elemente, z.B. Solarzellen in den aneinandergrenzenden Rahmen, wird der Wirkungsgrad der Solarzellen zu sehr verringert. Andere Dichtverfahren sind sehr aufwendig und teuer.

Die FR 2 465 315 betrifft Fotovoltstrom erzeugende Platten, die an ein Dach anpassbar sind. Die Platte ist mit einem peripheren Rahmen ausgerüstet, der durch Montieren von geradlinigen Leichtmetalllegierungs-Profilteilen gebildet wird. Die spezielle Form dieser Profilteile macht die Verlegung der angrenzenden Platten mit Überlappen der Ränder der letzteren möglich. Vier gerade Teile bilden eine Einrahmung um einen Schichtstoffverbund herum. Die geraden Teile weisen U-förmige Abschnitte auf, die jeweils mit Dichtungen versehen sind. Die Ränder des Schichtstoffverbundes werden in die mit Dichtungen versehenen U-förmigen Abschnitte der geraden Teile eingepasst.

Aufgabe der Erfindung ist es, einen Rahmen für die Aufnahme von plattenartigen Elementen aus Glas, Keramik, Metall oder Kunststoff aber insbesondere Solarmodulen und Profile für diese Rahmen zu schaffen, die einfach und kostengünstig herzustellen sind, und die sich auf einfache Weise als Dachhaut für ein Schrägdach verwenden und anordnen lassen.

Erfindungsgemäss ist ein derartiger Rahmen durch die Merkmale des unabhängigen Anspruchs 1 gekennzeichnet. Die Anordnung derartiger Profile ist durch die Merkmale des Anspruchs 6 gekennzeichnet. Die abhängigen Ansprüche beziehen sich auf vorteilhafte Ausführungsformen der Erfindung.

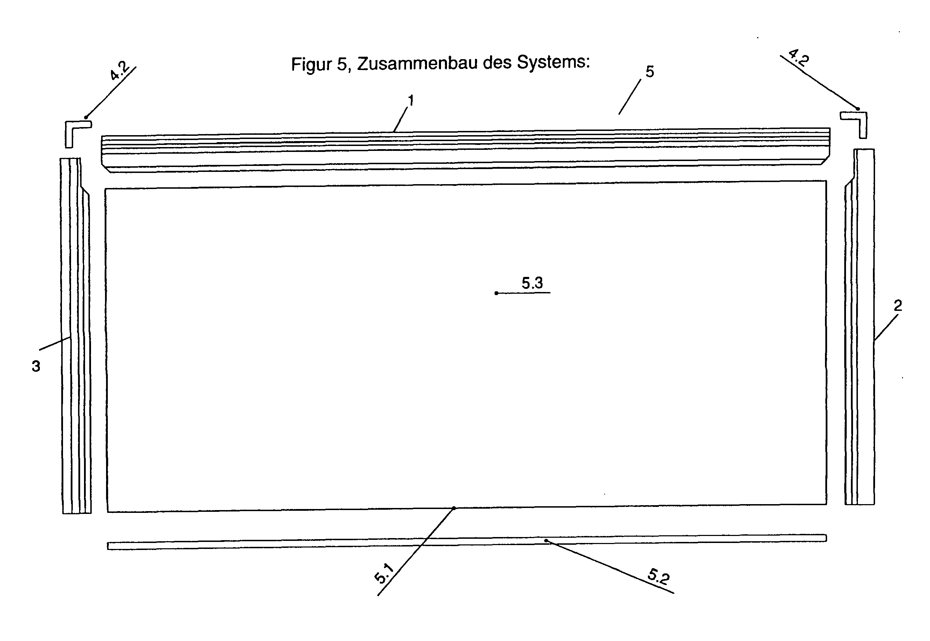

Dachmaterial weist üblicherweise eine unebene Oberfläche auf, um den Ablauf des Regenwassers zu kanalisieren. Werden flache Platten verwendet, so muss eine entsprechend grosse Überlappung vorgesehen werden, damit der Wasserabfluss keine unerwünschten Richtungen einnimmt. Durch diese Überlappung entsteht ein grosser Materialverbrauch mit entsprechend hohen Kosten. Durch das hier vorgeschlagene Montagesystem kann die Überlappung eliminiert werden. Neben anderen Materialien hat dies vor allem für die sogenannten Solarmodule entscheidende Vorteile. Solarmodule sind neuartige Bauelemente welche vorzugsweise auf dem Dach montiert werden unter Lichteinfall elektrischen Strom produzieren. Diese werden heute meistens auf die bestehende Dachhaut, das heisst zum Beispiel auf die Dachziegel, Faserzement oder Metallplatten aufgesetzt. Das Solarmodul produziert unter Lichteinfall elektrischen Strom. Bei der hier beschriebenen Montageart übernimmt das Solarmodul die zusätzliche Funktion als dichtendes Dachelement. Dadurch kann der zuvor erwähnte Dachziegel eingespart werden. Derartige Module bestehen in Sonderausführungen bereits. Die neuen Profile nach der Erfindung sind mit Vorteil stranggepresste Profile vorzugsweise aus Aluminium oder einem Kunststoff. Dadurch können Module respektive Platten von beliebiger Grösse verwendet werden. Die Verwendung von Strangpressprofilen und Standardmodulen erlaubt eine erhebliche Kosteneinsparung. Die Strangpressprofile werden auf die erforderliche Länge zugeschnitten (4.1) und wie ein Rahmen um die Platten herum gelegt(Figur 5). Zur seitlichen Abdichtung zwischen Platte und Profil (1.1) kann Silikon oder eine weiche Kunststoff-Folie, -Band oder -Profil verwendet werden. Im wasserabfliessenden Teil des Moduls (5.1), in der Regel der untere Bereich, wird der Rahmen vorzugsweise nicht durchgehend geführt. Es resultiert ein 7/8 oder 3/4 Rahmen. Das heisst das Profil wird an dieser Stelle ganz weggelassen oder nur auf der unteren Seite montiert. Die untere Seite bedeutet beim Solarmodul die lichtabgewandte Seite. Dies erlaubt den ungehinderten Abfluss von Regenwasser, Schnee, Schmutz und von anderen Partikeln. Trotzdem bleiben die vorgängig genannten Schutzfunktionen für die Platte erhalten. Die neu entworfenen Profile haben spezielle Nuten (1.2; 2.2; 3.2) eingebaut für die Befestigung der Profile untereinander, wie auch gegenüber der Dachkonstruktion. Gleichzeitig sind zusätzliche Rinnen für die Entwässerung integriert (1.3; 2.3; 3.3), falls Wasser durch die erste Barriere hindurch eindringt. Profile R und L haben je einen speziell ausgebildeten Überlappungsbereich(2.1; 2.3), welcher so ausgebildet ist, dass mehrere Funktionen erfüllt werden können. Hauptfunktion dabei ist die Dichtung gegen Regenwasser, Schnee und andere feste oder flüssige Stoffe. Dies entspricht den Funktionen von konventionellen Dachsystemen aus zum Beispiel Tonziegeln. Zweite Hauptfunktion ist die Unterstützung der richtigen Positionierung. Die Rinnen (3.1) und entsprechenden Gegenstücke (2. 1) sind derartig geformt, dass sie bei der Montage der gerahmten Platte die richtige Position erhalten. Das heisst in diesem Fall in der Mitte, damit eine Verschiebung nach beiden Seiten möglich ist. Dies ist notwendig, um die durch Temperaturschwankungen verursachten Ausdehnungen aufzunehmen. Ebenso können Dilatationen bei der Unterkonstruktion aufgenommen werden. Zum Zusammenfügen der Profile sind diverse Varianten möglich. Vorzugsweise wird ein Winkel aus Metall (4.2) in die in den Profilen eingebauten Nuten eingesetzt und mit Schrauben befestigt. An den Ecken werden die Profile in der vorgesehenen Weise zugeschnitten (4.1). Das Zusammenfügen muss in einer Art und Weise geschehen, dass das neben und darüber liegende Modul funktional korrekt plaziert werden kann. Funktional korrekt heisst in diesem Zusammenhang die einwandfrei Wasserführung und das mechanische Gefüge von einer Platte zur anderen. Im unteren Bereich vom Modul wird ein Standardprofil (5.2) angebracht zur mechanischen Arretierung. Es umfasst die Plattenkante nicht, so dass an der Oberfläche der zuvor erwähnte freie Abfluss möglich ist.

Ferner kann der Rahmen, respektive die Profile diverse Zusatzfunktionen übernehmen, welche im Zusammenhang mit der Funktion als Solarmodul stehen. Je nach verwendetem Profilmaterial und Detailausführung der Profile, kann die elektrische Verkabelung mit oder ohne Interface integriert werden. Das betrifft die Stromführung innerhalb des Modules wie auch die Übergänge von einem Module zum anderen und oder zum externen Anschluss. Hierzu können unter anderem auch Steckkontakte vorkommen. Integriert werden kann auch die Ladeelektronik für externe oder interne Akkumulatoren. Unter internen Akkumulatoren versteht sich hier der im Profilrahmen eingebaute (6.1) Akkumulator zur Speicherung von elektrischer Energie. Ferner können auch Wechselrichter zum Betrieb von Wechsetstromverbrauchern oder zur Einspeisung ins öffentliche Stromnetz in den Rahmen integriert werden.

Der Rahmen aus Profilen, hat vorzugsweise eine rechteckige oder quadratische Form und ist zum Aufnehmen von plattenartigen Elementen die Vorderseite, Rückseite und Seitenflächen aufweisen, ist aus unterschiedlichen Profilen gebildet. Wenigstens eines der Profile weist einen Teil auf, der L-förmig ausgebildet ist, um damit das plattenartige Element auf der Rückseite zu stützen und seitlich zu fassen. Dieses eine Profil kann auch nur eine Stützfläche aufweisen, um das plattenartige Element einzig auf der Rückseite zu stützen. Die übrigen Profile weisen einen ersten U-förmig ausgebildeten Teil auf, der zum plattenartigen Element hin geöffnet ist und nimmt den Randbereich des plattenartige Elementes auf. Wenigstens eines der Profile mit dem U-förmigen ausgebildeten Teil weist einen zweiten U-förmigen Teil auf, der nach vorne oder nach hinten geöffnet ist.

Nachstehend werden Ausführungsformen der Erfindung und Einzelheiten davon anhand der schematischen Zeichnungen näher erläutert. Es zeigen:
- Fig. 1: im Querschnitt ein Profil für den Rahmen, für die obere Einfassung der Platte und Fixierung von Profilrahmen und Platte an der Unterkonstruktion z.B. eines Dachs
- Fig. 2: im Querschnitt ein Profil für den Rahmen, das als rechte Einfassung der Platte mit oberem Doppelfalz geeignet ist, d.h. bei dem der zweite U-formartige Teil, der als doppeltes U ausgebildet ist nach hinten geöffnet ist;
- Fig. 3: im Querschnitt ein Profil, das als linke Einfassung der Platte mit unterem Doppelfalz geeignet ist, d.h. bei dem der zweite U-formartige Teil, der als doppeltes U ausgebildet ist nach vorne geöffnet ist;
- Fig. 4: eine Übersicht über den Zuschnitt und die Anordnung der verschiedenen Profile für den Rahmen;
- Fig. 5: den Zusammenbau der einzelnen Komponenten zum fertigen System, bzw. Rahmen;
- Fig. 6: im Querschnitt ein Profil mit Hohlraum d.h. eine Profil mit einem geschlossenen Kanal zur Unterbringung von Elektronik oder sonstigen Komponenten;

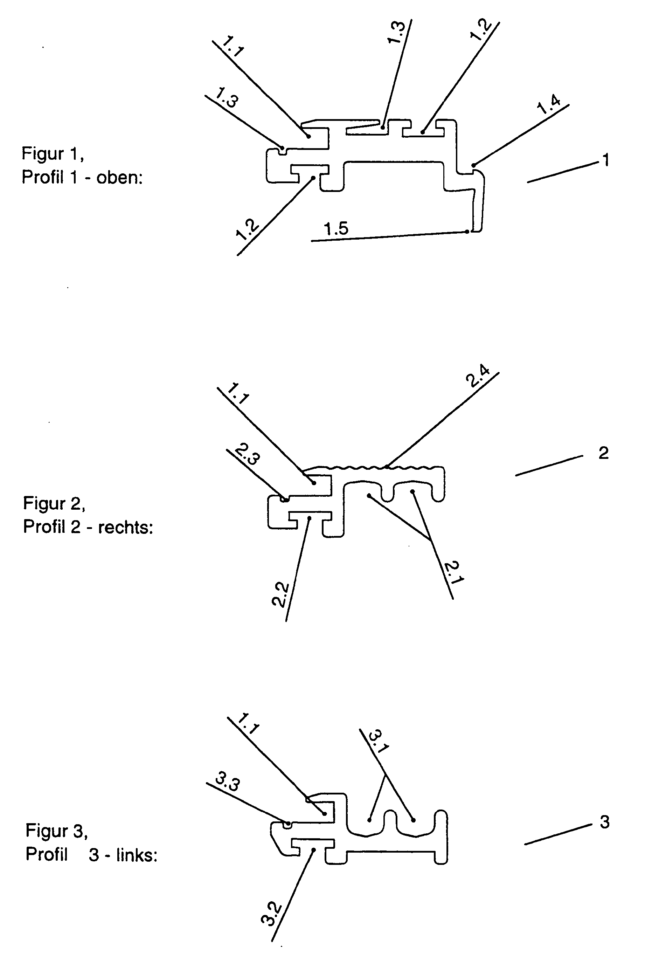

Das in Fig. 1 in einem Querschnitt gezeigte Profil 1 kann in einem Rahmen beispielsweise als oberer, quer verlaufender Rahmenteil bei einem Schrägdach, verwendet werden. Der U-formartige Teil 1.1 ist für die Aufnahme des Randes des plattenartigen Elementes vorgesehen. Die Kanäle 1.2 und 1.3 dienen für die Aufnahme von Verbindungselementen der den Rahmen bildenden Profile untereinander und für die Verbindung von die Dachhaut bildenden, benachbarten Rahmen.

Das in Fig. 2 im Querschnitt gezeigte Profil 2 weist einen ersten U-formartigen Teil 1.1 für die Aufnahme des Randes des plattenartigen Elementes auf. Ein zweiter U-formartiger Teil 2.1 ist hier als doppeltes U ausgebildet und nach hinten geöffnet. Die Rückseite 2.4 des zweiten U-formartig ausgebildeten Teils des Profils weist eine Struktur auf.

Das in Fig. 3 im Querschnitt gezeigte Profil 3 weist einen ersten U-formartigen Teil 1.1 für die Aufnahme des Randes des plattenartigen Elementes auf. Ein zweiter U-formartiger Teil 3.1 ist hier als doppeltes U ausgebildet und nach vorne geöffnet.

Bei z.B. rechteckige Rahmen, die jeweils links ein Profil, wie in Fig. 2 gezeigt und rechts ein Profil, wie in Fig. 3 gezeigt, aufweisen und die nebeneinander liegend so angeordnet werden, dass die zweiten U-formartigen Teile gegeneinander gerichtet und in Fallrichtung z.B. eines schrägen Dachs verlaufen, wobei diese U-formartigen Teile ineinander greifen, bilden so eine weitgehend wasser-, schnee- und staubdicht verbundene Dachhaut. In Fallrichtung übereinander folgende Rahmen mit Elementen können schuppenartig überlappend angeordnet werden.

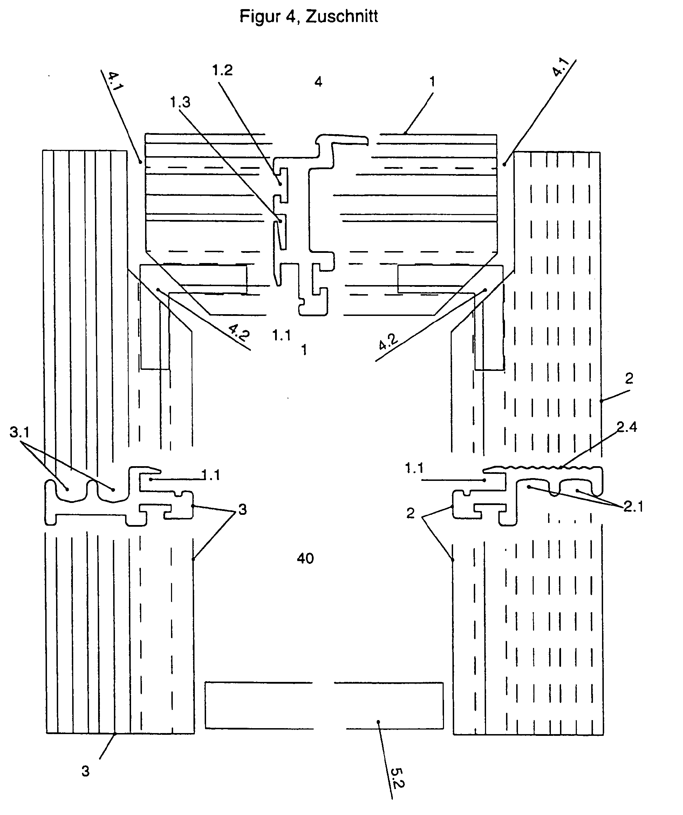

Fig. 4 zeigt schematisch, rahmenartig angeordnet die Profile 1, 2, 3 und 5.2 für einen rechteckigen Rahmen 4. In einer Schrägdachanordnung wäre das Profil 1 oben. Das untere Profil 5.2 ist hier lediglich als bandartiges Rechteckprofil gezeigt, welches das plattenartige Element, das im Innern (40) des Rahmens 4 zu liegen kommt, am unteren Rand lediglich hinten stützt. D.h. das plattenartige Element liegt auf dem Profil 5.2. Das untere Profil könnte auch einen L-formartigen Querschnitt haben und somit das plattenartige Element am unteren Rand nicht nur stützen, sondern zusätzlich auch am unteren Rand festhalten, was bei einer schrägen Anordnung als Dachkonstruktion von Vorteil sein kann. In der Grundvariante umfasst das Profil 5.2 die Platte nicht vollständig. Die der Witterung zugewandte Seite bleibt frei für den ungehinderten Abfluss von Wasser, Schnee, Schmutz, etc. Beispielsweise, aber nicht erfindungsgemäß, kann in einer Spezialausführung das Profil 5.2 die Platte gleichermassen einfassen (1.1) wie die anderen drei Profile.

Die schematische Explosionszeichnung eines Rahmens 5 von Fig. 5 zeigt das plattenartige Element, z.B. einen Solarmodul 5.3, der vom Rahmen 5 gefasst wird. Der Rahmen 5 wird aus den Profilen 1, 2, 3 und 5.2 gebildet. Der Solarmodul 5.3 wird im Randbereich 5.1 vom Profil 5.2 hinten gestützt. Die Profile 1 und 3, bzw. 1 und 2 werden mit Winkelstücken 4.2 , Schrauben oder anderem Befestigungsmaterial gegenseitig fixiert und miteinander verbunden.

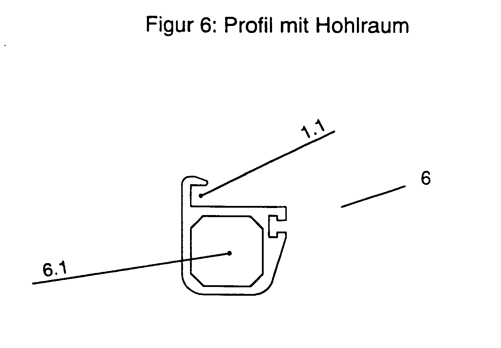

Schliesslich zeigt Fig. 6 in einem schematischen Querschnitt ein Profil 6 mit einem Hohlraum, bzw. geschlossenen Kanal 6.1 für die Aufnahme von Kabeln, Akkumulatoren, Wechselrichtern und dergleichen. Diese Profil 6 weist einen U-formartigen Teil 1.1 für die Aufnahme des Randes des plattenartigen Elementes auf. Das gezeigte Profil 6 mit dem Kanal 6.1 eignet sich beispielsweise für einen Rahmen der z. B. den seitlichen Abschluss einer Schrägdachkonstruktion bildet.

Profilkombination und Profilform gemäss Zeichnung 1 bis 3 für die Einfassung von plattenartigen Elementen sind so ausgebildet, dass diese für die Dachintegration verwendet werden können und eine wasserdichte Dachhaut bilden. Die verschiedenen Profile werden vorzugsweise nach der bekannten Methode des Strangpressens hergestellt. Andere Varianten sind nicht ausgeschlossen.

Zu den plattenartigen Elementen (5.3) gehören unter anderem Solarzellenmodule, ferner Platten aus Metall, Glas, Faserzement, Kunststoff, Verbundmaterial aus Metall und Kunststoff und andere.

Beispielsweise, aber nicht erfindungsgemäß, werden die Platten mit mindestens einer und maximal vier verschiedenen Profilformen eingefasst. Die drei Profile haben typischerweise die Form wie sie in den Figuren 1 bis 3 und Figur 6 im Querschnitt dargestellt sind.

Form und Verwendung der Profile erfolgt in der Art und Weise, dass zusammen mit den Platten, ausser eventuellen Dichtmitteln zwischen Profil und Platte, ohne konstruktive Zusatzkomponenten und Zusatzelemente ein wasserdichtes Dach entsteht. Dazu sind unter anderem Profile derart geformt, dass sie überlappend angeordnet werden können, wie dies in den Figuren 1 bis 3 gezeigt ist. Es überlappen sich zwar die Profile der Rahmen, jedoch nicht die in den Rahmen gefassten und gehaltenen Elemente, wie z.B. Solarmodule.

Die Profile werden in den Ecken derartig zusammengefügt, dass die Überlappung und die Wasserführung einwandfrei funktioniert, wie dies in Figur 4 gezeigt ist. Die Profile werden in einer Art und Weise verwendet, dass Regenwasser, Schnee, Schmutz und andere Niederschläge ungehindert abfliessen können.

Eine günstige Variante ist ein sog. 7/8 Rahmen, bei dem auf der Abflusseite für Flüssigkeit vom Rahmen und Element, der eine Teil des Rahmens weggelassen ist, wie dies in den Figur 4 und 5 dargestellt ist.

Erfindungsgemäss sind in den Profilen spezielle Formgebungen integriert zur Unterstützung der Befestigung auf dem Dach und der Befestigung der Elementen untereinander (1.2; 1.4; 1.5; 2.2 3.2). Dabei ist insbesondere auch der Potentialausgleich durch entsprechendes Zusammenfügen der Elemente gewährleistet und die Halterung gegen Windlasten. Es kann damit keine Funkenbildung zwischen einzelnen Rahmen entstehen.

Die Profile können auch einen integriertem Zwischenraum als Variante, zur Aufnahme von zusätzlichen Komponenten, Funktionen und Anlagenbestandteilen aufweisen, wie zum Beispiel für die Aufnahme von Akkumulatoren (6.1), elektronischen Regeleinrichtungen, elektrischen und mechanischen Verbindungsfunktionen und zu anderen Zwecken dienenden Elementen. Beispielsweise gehört zum definierten Zweck die Produktion, Lagerung und der Transport von elektrischem Strom. Ein derartiger integrierter Zwischenraum ist in Figur 6 gezeigt.

Wenn in der vorliegenden Schrift von ersten U-formartigen oder U-förmigen Teilen der Profile die Rede ist, soll damit ein Ausbildung des Profils bezeichnet werden, die geeignet ist das Plattenartige Element im Randbereich zu fassen. Wenn zweite U-formartige oder U-förmige Teile der Profile erwähnt sind, soll damit ausgedrückt sein, dass diese Teile, bezogen auf die zu fassenden plattenartigen Elemente wie z.B. Solarmodule oder bezogen auf die Profile, die in der Regel Flachprofile sind, nach hinten oder nach vorne geöffnet sein sollen. Diese zweiten U-formartigen Teile sollen auch so ausgebildet sein, dass nach hinten und nach vorne geöffnete U-Strukturen ineinander greifen können. Wenn beispielsweise bei einer Anordnung mehrerer Rahmen, die zweiten U-formartigen Teile nebeneinander liegender, aneinander grenzender Rahmen im gegenseitigen Eingriff sind, ist es von Vorteil, wenn die Rahmen mit den darin gefassten Elementen noch in einem gewissen Bereich gegeneinander verschoben werden können. Es ist auch von Vorteil, wenn die sich im Eingriff befindlichen U-Strukturen nebeneinander liegender Profilrahmen, auch den Ausgleich von Ausdehnungen und Verkürzungen aufgrund von Erwärmung und Abkühlung zulassen und ausgleichen. Form und Querschnitt der Schenkel der U können also in grossen Bereichen unterschiedlich sein. Ebenso können andere Teile vom Profil einen anderen Querschnitt und eine andere Form aufweisen.

### Verzeichnis der Figuren:

- Figur 1:: Profil Nr. 1, obere Einfassung der Platte und Fixierung an der Unterkonstruktion
- Figur 2:: Profil Nr. 2, rechte Einfassung der Platte mit oberem Doppelfalz
- Figur 3:: Profil Nr. 3, linke Einfassung der Platte mit unterem Doppelfalz
- Figur 4:: Übersicht über den Zuschnitt der verschiedenen Profile
- Figur 5:: Zusammenbau der einzelnen Komponenten zum fertigen System
- Figur 6:: Profil mit Hohlraum

## Patentansprüche

1. Rahmen aus Profilen, vorzugsweise rechteckiger oder quadratischer Rahmen, zum Aufnehmen von plattenartigen Elementen (5.3) mit Vorderseite, Rückseite und Seitenflächen, wobei
der Rahmen (4; 5) aus unterschiedlichen Profilen (1,2, 3,5. 2) gebildet wird, wobei
wenigstens eines der Profile einen Teil aufweist, der L-formartig ausgebildet ist, um damit das plattenartige Element (5.3) auf der Rückseite zu stützen und seitlich zu fassen oder
dieses wenigstens eine Profil (5.2) nur eine Stützfläche aufweist, um das plattenartige Element (5.3) einzig auf der Rückseite zu stützen, und
die übrigen Profile (1,2, 3) einen ersten U-formartig ausgebildeten Teil (1.1) aufweisen, der zum plattenartigen Element (5.3) hin geöffnet ist, um den Randbereich (5.1) des plattenartigen Elementes (5.3) aufzunehmen,
wobei wenigstens eines der Profile (2 ; 3) mit dem ersten U-formartig ausgebildeten Teil (1.1) wenigstens einen zweiten U-formartig ausgebildeten Teil (2.1 ; 3.1) aufweist, der nach vorne oder nach hinten geöffnet ist.

2. Rechteckiger oder quadratischer Rahmen (4) nach Anspruch 1, mit zwei sich gegenüberliegenden Profilen (2 ; 3), die einen ersten U-formartigen Teil (1.1) und einen zweiten U-formartigen Teil (2.1 ; 3.1) aufweisen, wobei der zweite U-formartige Teil bei einem dieser Profile (3) nach vorne und beim anderen dieser Profile (2) nach hinten geöffnet ist.

3. Rahmen (4) nach Anspruch 1 oder 2, bei welchem der zweite U-formartige Teil (2.1 ; 3.1) von Profilen zwei- oder mehrfach U-formartig ausgebildet ist.

4. Rahmen (4) nach einem der Ansprüche 1 bis 3, bei welchem die Rückseite (2.4) des zweiten U-formartigen Teiles (2.1) wenigstens eines Profils (2) in Längsrichtung des Profils einen oder mehrere Kanäle aufweist.

5. Rahmen (5) nach einem der Ansprüche 1 bis 4 mit einem plattenartigen Element (5. 3), das ein Solarmodul ist.

6. Anordnung von mehreren Rahmen (4) nach einem der Ansprüche 1 bis 5, bei der zweite U-formartige Teile (2.1 ; 3.1) von nebeneinander angeordnete Rahmen (4) ineinandergreifen.

7. Anordnung von mehreren Rahmen (4) nach einem der Ansprüche 1 bis 5, bei der übereinander angeordnete Rahmen (4) schuppenartig angeordnet sind.

8. Schrägdach mit einer Anordnung von mehreren Rahmen nach Anspruch 6 oder 7 als Dachhaut, bei der die zweiten U-formartigen Teile (2. 1 ; 3.1) der Profile (2,3), welche ineinandergreifen, wenigstens angenähert in Fallinie des Schrägdachs verlaufen.

## Claims

1. Frame made up of sections, preferably a rectangular or square frame, for accommodating panel-type elements (5.3) with a front face, rear face and side faces,
which frame (4; 5) is made up of different sections, and at least one of the sections has an L-shaped part in order to support the panel-type element (5.3) on the rear face and enclose the side or
this at least one section (5.2) has only a support surface for supporting the panel-type element (5.3) solely from the rear face, and
the other sections (1,2, 3) have a first U-shaped part (1.1) which is open towards the panel-type element (5.3) in order to accommodate the peripheral region (5.1) of the panel-type element (5.3),
and at least one of the sections (2; 3) with the first U-shaped part (1.1) has at least a second U-shaped part (2.1; 3.1) which is open towards the front or towards the rear.

2. Rectangular or square frame (4) as claimed in claim 1, with two oppositely lying sections (2; 3) with a first U-shaped part (1.1) and a second U-shaped part (2.1; 3.1), and the second U-shaped part of one of these sections (3) is open towards the front and the other of these sections (2) is open towards the rear.

3. Frame (4) as claimed in claim 1 or 2, in which the second U-shaped part (2.1; 3.1) of sections is provided with two or more U-shapes.

4. Frame (4) as claimed in one of claims 1 to 3, in which the rear face (2.4) of the second U-shaped part (2.1) of at least one section (2) has one or more passages in the longitudinal direction of the section.

5. Frame (5) as claimed in one of claims 1 to 4, incorporating a panel-type element (5.3) which is a solar module.

6. Arrangement of several frames (4) as claimed in one of claims 1 to 5, in which the second U-shaped parts (2.1; 3.1) of adjacently disposed frames (4) locate in one another.

7. Arrangement of several frames (4) as claimed in one of claims 1 to 5, in which frames (4) disposed one above the other are arranged in a scale-type pattern.

8. Pitched roof with an arrangement of several frames as claimed in claim 6 or 7 serving as a roof skin, in which the second U-shaped parts (2.1; 3.1) of the sections which locate in one another extend at least approximately within the downward line of the pitched roof.

## Revendications

1. Cadre formé de profilés, de préférence cadre rectangulaire ou carré, pour recevoir des éléments (5.3) semblables à des plaques, avec une face antérieure, une face postérieure et des surfaces latérales, dans lequel :
le cadre (4 ; 5) est formé par des profilés différents (1, 2, 3, 5.2),
l'un au moins des profilés comprend une partie réalisée en forme de L, afin de soutenir ainsi l'élément (5.3) semblable à une plaque sur la face postérieure et de le tenir latéralement, ou
ledit au moins un profilé (5.2) comporte une seule surface de soutien afin de soutenir l'élément semblable à une plaque (5.3) uniquement sur la face postérieure, et
les profilés restant (1, 2, 3) comprennent une première partie (1.1) réalisée en forme de U, ouverte vers l'élément semblable à une plaque (5.3) afin de recevoir la zone de bordure (5.1) de l'élément semblable à une plaque (5.3), et
l'un au moins des profilés (2 ; 3) avec la première partie (1.1) réalisée en forme de U comporte au moins une seconde partie (2.1 ; 3.1) réalisée en forme de U, qui est ouverte vers l'avant ou vers l'arrière.

2. Cadre rectangulaire ou carré (4) selon la revendication 1, comprenant deux profilés opposés (2 ; 3), qui comportent une première partie en forme de U (1.1) et une seconde partie en forme de U (2.1 ; 3.1), la seconde partie en forme de U étant ouverte vers l'avant dans l'un de ces profilés (3) est vers l'arrière dans l'autre de ces profilés (2).

3. Cadre (4) selon la revendication 1 ou 2, dans lequel la seconde partie en forme de U (2.1 ; 3.1) est réalisée à partir de profilés présentant deux ou plusieurs fois une forme en U.

4. Cadre (4) selon l'une des revendications 1 à 3, dans lequel la face postérieure (2.4) de la seconde partie en forme de U (2.1) d'au moins un profilé (2) comporte un ou plusieurs canaux en direction longitudinale du profilé.

5. Cadre (4) selon l'une des revendications 1 à 4, comprenant un élément semblable à une plaque (5.3) qui est un module solaire.

6. Agencement de plusieurs cadres (4) selon l'une des revendications 1 à 5, dans lequel des secondes parties en forme de U (2.1 ; 3.1) de cadres (4) agencés les uns à côté des autres s'engagent les unes dans les autres.

7. Agencement de plusieurs cadres (4) selon l'une des revendications 1 à 5, dans lequel des cadres agencés les uns au-dessus des autres (4) sont agencés à la manière d'écailles.

8. Toit en pente comprenant un agencement de plusieurs cadres selon la revendication 6 ou 7 à titre de peau de toiture, dans lequel les secondes parties en forme de U (2.1 ; 3.1) des profilés (2, 3), qui s'engagent les unes dans les autres, s'étendent au moins approximativement suivant la ligne de plus grande pente du toit en pente.
